# EUROPÄISCHE PATENTSCHRIFT

(11) **EP 3 476 499 B1**
(45) Veröffentlichungstag und Bekanntmachung des Hinweises auf die Patenterteilung: **17.02.2021**
(21) Anmeldenummer: 18195717.6
(22) Anmeldetag: 20.09.2018
(51) Int. Cl.: B21B 38/02, B21B 38/06

(54) **MESSROLLE UND VERFAHREN ZUR HERSTELLUNG EINER SOLCHEN MESSROLLE**
MEASURING ROLLER AND METHOD FOR MANUFACTURING SUCH A MEASURING ROLLER
ROULEAU DE MESURE ET PROCÉDÉ DE FABRICATION D'UN TEL ROULEAU DE MESURE

(30) Priorität: 27.10.2017 DE 102017125294
(43) Veröffentlichungstag der Anmeldung: 01.05.2019
(73) Patentinhaber: Redex S.A., 45210 Ferrières-en-Gâtinais (FR)
(72) Erfinder: Noé, Andreas, 47647 Kerken (DE); Moos, Christoph, 46419 Isselburg (DE)
(74) Vertreter: Decorchemont, Audrey Véronique Christèle

(56) Entgegenhaltungen:
- EP-A1- 0 982 563
- EP-A2- 1 048 370
- FR-A1- 2 602 327
- US-A1- 2002 092 365

## Beschreibung

Die Erfindung betrifft eine Messrolle zur Ermittlung (bzw. Überwachung) von Planheitsfehlern eines Bandes (insbesondere Metallbandes) und/oder zur Ermittlung (bzw. Überwachung) des Bandzuges eines Bandes (insbesondere Metallbandes),
mit einem Rollenkörper (z. B. aus Stahl) und einer oder mehreren (über die Rollenoberfläche bzw. Umfangsfläche in Breitenrichtung und/oder Umfangsrichtung verteilten und) in den Rollenkörper integrierten Messstellen,
wobei die Messstellen jeweils zumindest einen mit der Oberfläche des Rollenkörpers fluchtenden Messkörper aufweisen, der unter Bildung eines umlaufenden Spaltes in einer Ausnehmung im Rollenkörper auf einem oder mehreren Kraftmesssensoren angeordnet ist. Die Erfindung betrifft weiters ein Verfahren zur Herstellung einer solchen Messrolle.Eine gattungsgemässe Messrolle ist aus FR 2 602 327 A1 bekannt.

Mit einer solchen Messrolle, die auch als Planheitsmessrolle bezeichnet wird, werden insbesondere Planheitsfehler in Bändern, insbesondere Metallbändern, im Wege einer Messung der Bandzugspannungsverteilung über die Bandbreite ermittelt, wobei das über die gesamte Bandbreite unter einem Bandzug stehende Band die Planheitsmessrolle mit einem vorgegebenen Umschlingungswinkel umschlingt und dadurch örtliche Anpresskräfte entsprechend der örtlichen Längszugspannung Verteilung in Bandbreitenrichtung auf die Planheitsmessrolle ausübt, aus denen sich die Bandzugspannungsverteilung erfassen lässt. Aus der Bandzugspannungsverteilung über die Bandbreite lassen sich unmittelbar Bandfehler und insbesondere Welligkeiten bzw. Bandsäbel ermitteln, da Längenabweichungen einzelner Bandstreifen durch Zugspannungsunterschiede repräsentiert werden.

Die Messkörper der einzelnen Messstellen bilden Abdeckungen, die auf die darunter angeordneten Kraftmesssensoren, z. B. Piezoquarze wirken. Dabei ist es zweckmäßig, die Abdeckungen unter Zwischenschaltung der Piezoquarze gegen den Rollenkörper zu verspannen. Um einen Kraftnebenschluss zwischen den Messkörpern bzw. Abdeckungen und den Rollenkörpern andererseits zu minimieren, ist vorgesehen, dass die Messkörper bzw. Abdeckungen durch einen umlaufenden Spalt von dem Rollenkörper entkoppelt sind und ausschließlich gegen die Kraftsensoren verspannt sind. Die Messkörper bzw. Abdeckungen werden folglich im Zuge der Belastung ohne nennenswerte Verformung der Abdeckung gegen die Kraftmesssensoren bewegt.

Derartige Messrollen sind z. B. aus der EP 0 595 072 B2 oder DE 10 2004 008 303 A1 sowie der DE 10 2014 115 023 A1 bekannt.

Bei der aus der EP 0 595 072 B2 bekannten Planheitsmessrolle sind die Messkörper als kreisförmige Abdeckungen ausgebildet, die auf jeweils einem Kraftmessgeber aufliegen. Über die Bandbreite sind eine Vielzahl von solchen Messstellen verteilt angeordnet, so dass mit den einzelnen Messstellen die Bandzugspannung für unterschiedliche Breitenpositionen erfasst wird.

Aus der DE 10 2004 008 303 A1 ist eine Planheitsmessrolle bekannt, bei der in die Rollenoberfläche Planheitsmessbalken als Messkörper integriert sind, welche auf Sensoren abgestützt sind und zur Bestimmung der Zugspannungsverteilung über die Bandbreite schräg zur Rollenachse verlaufen, so dass sich ein solcher Messbalken einerseits über einen vorgegebenen Breitenbereich und andererseits über einen vorgegebenen Umfangsbereich der Rolle erstreckt. Durch einen solchen schräg zur Rollenachse angeordneten Messbalken lassen sich zeitlich nacheinander eine Vielzahl von Messwerten erfassen, die jeweils unterschiedlichen Breitenpositionen der Rolle und damit auch des Bandes zugeordnet sind, so dass mit einem Messkörper (nämlich einem Messbalken) Messungen an unterschiedlichen Breitenpositionen durchgeführt werden können.

Demgegenüber beschreibt die DE 10 2014 115 023 A1 eine Planheitsmessrolle mit mehreren in die Rollenoberfläche integrierten Messstellen, welche für die Messung der Bandzugspannung über die Rollenbreite verteilt an verschiedenen Breitenpositionen angeordnet sind. Die Messkörper sind dabei mit ihrer in Bandlaufrichtung verlaufenden Längsrichtung in einer Draufsicht auf die Rollenoberfläche senkrecht zur Rollenachse orientiert, so dass mit den Messstellen jeweils eine Vielzahl von Messwerten je Rollenumdrehung für die jeweilige Breitenposition erfassbar sind.

In der DE 10 2008 030 282 B3 wird bei einer Messrolle vorgeschlagen, einen Messbalken vorzusehen, der sich als Bandzugmessbalken zur Ermittlung des zeitlichen Verlaufes des Bandzuges im Wesentlichen entlang der Umfangsrichtung über einen vorgegebenen Umfangsbereich erstreckt. Diese Messrolle lässt sich folglich zur Ermittlung des Bandzuges eines Bandes und insbesondere zur zeitlichen Überwachung des Bandzuges eines Bandes verwenden. Dabei besteht die Möglichkeit, einerseits einen solchen Bandzugmessbalken als Referenzbalken und andererseits Messkörper zur Planheitsmessung, z. B. Planheitsmessbalken vorzusehen, so dass einerseits eine Planheitsmessung und andererseits eine Bandzugmessung möglich wird. Der Referenzmessbalken zeichnet folglich zeitliche Schwankungen des Bandzuges auf. Da diese zeitlichen Schwankungen des Bandzuges dem Planheitsmesssignal der Planheitsmesskörper überlagert sind, lässt sich auf diese Weise der Einfluss der zeitlichen Zugspannungsschwankungen im Band aus dem Messsignal der Planheitsmessbalken herausfiltern.

Sämtliche Messrollen der beschriebenen Art basieren auf der Überlegung, die Messkörper (z. B. Abdeckungen/Messbalken oder dergleichen) zur Vermeidung eines Kraftnebenschlusses von dem Rollenkörper zu entkoppeln, und zwar über den beschriebenen umlaufenden Spalt zwischen Messkörper und Rollenkörper. Ein ständiges Problem kann das Eindringen von Schmutzpartikeln in den Spalt bilden. Ferner besteht grundsätzlich die Gefahr, dass der umlaufende Spalt - sofern er sich tatsächlich durchgehend bis an die Rollenoberfläche und folglich unmittelbar bis an das Band (z. B. Metallband) erstreckt, unerwünschte Abdrücke an dem Band erzeugt.

Das Eindringen von Schmutz in den Bewegungsspalt soll gemäß EP 0 595 072 A1 dadurch vermieden werden, dass dieser Spalt mittels eines O-Ringes oder einer Kunststoffschicht verschlossen wird. Dem Problem der Abdrücke am Band wird dadurch nicht Rechnung getragen.

Alternativ oder ergänzend werden dabei in der Praxis Planheitsmessrollen mit Beschichtungen aus Kunststoff, z. B. mit einer PU-Beschichtung eingesetzt. Eine solche Lösung ist insbesondere bei der Verarbeitung von Aluminium- oder Edelstahl-Bändern vorteilhaft.

Bei Stahlbändern wird es jedoch bevorzugt, auf eine solche Kunststoffbeschichtung zu verzichten, so dass alternativ die Verwendung einer Hartbeschichtung aus verschleißfähigen Metallen auf die Planheitsmessrolle aufgebracht wird. In der Praxis besteht dabei das Problem, dass im Bereich der unter einer solchen Ummantelung liegenden Bewegungsspalte die Hartbeschichtung aufgrund von Mikrobewegungen der Abdeckungen der Kraftmesssensoren zu Rissbildung neigt. Daher schlägt die DE 298 24 236 U1 vor, eine solche Ummantelung als Hartbeschichtung auf ein Trägerrohr aufzubringen, d. h. die Planheitsmessrolle wird mit einem Trägerrohr ummantelt und darauf die Hartbeschichtung als Ummantelung aufgetragen, z. B. durch thermisches Spritzen. Damit werden zwar die oben beschriebenen Probleme im Zusammenhang mit der Rissbildung in der Hartbeschichtung vermieden. Es stört jedoch der Kraftnebenschluss über das Trägerrohr, so dass die Messsignale negativ beeinflusst werden.

Davon ausgehend wurde in der DE 10 2004 003 676 A1 alternativ vorgeschlagen, die Messstellen mit einer oder mehreren mit der Rollenoberfläche adhäsiv verbundenen Metallfolien abzudecken, so dass dann wiederum auf die mit den Metallfolien abgedeckten Messstellenbereiche bzw. auf die ganze Rollenoberfläche eine Ummantelung aufgebracht werden kann, die aus einem Hartmetall, z. B. Hartchrom oder Wolframcarbid bestehen kann oder die aus Gummi oder Kunststoff, z. B. Polyurethan gefertigt ist.

Im Übrigen ist aus der EP 1 759 778 B1 eine Messrolle bekannt, die einen Tragkörper sowie in diesen integrierte Sensoren aus piezoelektrischem Material zur Messung der auf den Außenmantel des Tragkörpers wirkenden radialen Kraftkomponenten der Bandzugspannung und/oder Temperatur des Bandmaterials bzw. Tragkörpers dient. Der rohrförmige Tragkörper weist eine Ummantelung auf und die Sensoren sind zwischen dem Tragkörper und der Ummantelung angeordnet, wobei das piezoelektrische Material der Sensoren an Fasern gebunden ist, die in Längsrichtung der Sensoren angeordnet sind und parallel zur Oberfläche des Tragkörpers der Messrolle verlaufen. Dabei kann die Ummantelung eine verschleißhemmende Außenschicht aufweisen.

Die FR 2602327A1 beschreibt eine Messrolle, bei welcher in eine Ausnehmung des Rollenkörpers eine Abdeckung eingesetzt ist und wobei unterhalb dieser Abdeckung Kraftmessgeber angeordnet sein können. Diese Abdeckung lässt sich mit dem Rollenkörper verschweißen.

Ausgehend von dem eingangs erläuterten Stand der Technik liegt der Erfindung das technische Problem zugrunde, eine Messrolle zur verbesserten Ermittlung von Planheitsmessfehlern und/oder des Bandzuges eines Bandes, insbesondere eines Metallbandes, zu schaffen. Insbesondere sollen Beschädigungen bzw. Abdrücke am Metallband vermieden werden, und zwar unter gleichzeitiger Vermeidung oder jedenfalls Minimierung eines Kraftnebenschlusses zwischen Messkörpern und Rollenkörper.

Zur Lösung dieser Aufgabe lehrt die Erfindung, eine Vorrichtung mit den Merkmalen des Anspruchs 1 und ein Verfahren mit den Merkmalen des Anspruchs 9. Erfindungsgemäß ist vorgesehen, dass der umlaufende Spalt (zwischen Messkörper und Rollenkörper) im Bereich der Oberfläche des Rollenkörpers, d. h. an dem der Rollenoberfläche zugewandten oberen Ende des Spaltes, mit einem Schweißzusatzwerkstoff verschlossen oder abgedeckt ist.

Dies lässt sich in einer ersten Ausführungsform der Erfindung dadurch realisieren, dass in den umlaufenden Spalt (von der Oberfläche des Rollenkörpers aus) eine (umlaufende) Schweißnaht aus dem Schweißzusatzwerkstoff eingebracht ist, die sich jedoch - bezogen auf die Tiefe des Spaltes - lediglich über einen verhältnismäßig geringen Bereich erstreckt, so dass lediglich eine Schweißnaht mit geringer Dicke von z. B. 0,5 mm bis 5 mm, z. B. 1 mm bis 4 mm, vorzugsweise 1 mm bis 3 mm vorgesehen ist. Der umlaufende Spalt wird folglich mit einer solchen (dünnen) Schweißnaht über den gesamten Umfang des Rollenkörpers abgedeckt und damit verschlossen, jedoch lediglich über einen geringen Teil der Tiefe des Spaltes, so dass der Spalt zwischen Rollenkörper und Messkörper grundsätzlich erhalten bleibt, jedoch lediglich im Bereich der Oberfläche des Messkörpers verschlossen ist. Im Zuge von Versuchen wurde überraschend festgestellt, dass die Messergebnisse durch einen solchen "Teil-Verschluss" des Spaltes nicht bzw. nicht wesentlich beeinflusst werden, d. h. der über den Schweißzusatzwerkstoff erzeugte Kraftnebenschluss zwischen Messkörper und Rollenkörper verfälscht das Messergebnis nicht oder jedenfalls nicht wesentlich. Es wird lediglich ein geringeres Signal festgestellt, als ohne Schweißzusatzwerkstoff, d. h. es erfolgt eine Signalabsenkung. Die Ermittlung der Zugspannung bzw. Zugspannungsverteilung wird dadurch jedoch nicht entscheidend beeinträchtigt. Dabei lässt sich durch das Verschließen des Spaltes mit Hilfe des Schweißzusatzwerkstoffes eine Beeinflussung des Bandes durch Abdrücke, die beim Stand der Technik im Bereich der Messstellen entstehen können, zuverlässig vermeiden, da eine einheitliche, geschlossene Rollenoberfläche, und zwar metallische Rollenoberfläche realisiert ist. Insofern lässt sich die Erfindung insbesondere bei solchen Metallbändern einsetzen, bei denen bevorzugt auf eine Kunststoffbeschichtung verzichtet werden soll. Das Verschließen des Spaltes hat im Übrigen den Vorteil, dass bei einer zusätzlich aufgebrachten Hartbeschichtung eine Rissbildung in der Hartbeschichtung selbst im Dauerbetrieb vermieden wird.

Die beschriebenen Vorteile werden in einer zweiten Ausführungsform der Erfindung gleichermaßen realisiert, und zwar dadurch, dass der Rollenkörper zumindest im Bereich der Messstellen, vorzugsweise jedoch über die gesamte Oberfläche, mit einer durch Auftragsschweißen erzeugten Schweißbeschichtung aus dem Schweißzusatzwerkstoff versehen ist, welche den umlaufenden Spalt abdeckt. Bei dieser Ausführungsform wird mit dem erfindungsgemäßen Schweißzusatzwerkstoff folglich nicht eine singuläre Schweißnaht in den umlaufenden Spalt eingebracht, sondern die (gesamte) Rollenoberfläche wird im Wege des Auftragsschweißens mit einer Schweißbeschichtung aus dem Schweißzusatzwerkstoff versehen. Damit wird ebenfalls eine geschlossene (metallische) Rollenoberfläche geschaffen, so dass Abdrücke und damit Beschädigungen am Band vermieden werden, ohne dass ein nennenswerter Kraftnebenschluss die Messung (negativ) beeinflusst. Ähnlich wie bei der Erzeugung der beschriebenen Schweißnaht erfolgt damit zwar über den gesamten Umfang des Spaltes ein zuverlässiger Verschluss, jedoch ebenfalls lediglich über eine geringe Tiefe. Denn die Dicke der Schweißbeschichtung weist vorzugsweise lediglich 0,5 bis 5 mm, z. B. 1 mm bis 4 mm, besonders bevorzugt 1 mm bis 3 mm auf.

Insgesamt wird erfindungsgemäß durch ein Verschließen oder Abdecken des umlaufenden Spaltes mit Hilfe eines Schweißzusatzwerkstoffes (entweder durch Einbringen einer singulären Schweißnaht oder durch Aufbringen einer Auftragsschweißung) eine geschlossene, metallische Rollenoberfläche realisiert, die eine einwandfreie Messung der Bandzugspannung bzw. Spannungsverteilung auch bei solchen Bandmaterialien ermöglicht, bei denen nicht auf eine Kunststoffummantelung zurückgegriffen werden soll. Insofern lässt sich die erfindungsgemäße Messrolle bevorzugt bei der Verarbeitung von Stahlbändern einsetzen.

Zur Erzeugung einer einheitlichen, glatten Rollenoberfläche ist es vorteilhaft, den Rollenkörper nach Aufbringen des Schweißzusatzwerkstoffes (Schweißnaht und/oder Schweißbeschichtung) abzuschleifen und auf diese Weise eine glatte, geschliffene Rollenoberfläche zu erzeugen.

Dabei besteht die Möglichkeit, die Messrolle mit dieser abgeschliffenen Oberfläche einzusetzen. In bevorzugter Weiterbildung ist es jedoch vorteilhaft, auf den Rollenkörper nach dem Aufbringen des Schweißzusatzwerkstoffes (z. B. der Schweißnaht und/oder der Schweißbeschichtung) und gegebenenfalls nach einem Abschleifen zusätzlich eine Hartbeschichtung aufzubringen, welche schließlich die Rollenoberfläche der Messrolle während des Betriebes bildet. Eine solche Hartbeschichtung kann in grundsätzlich bekannter Weise z. B. durch thermisches Spritzen erzeugt werden. Es kann sich z. B. um eine Hartbeschichtung aus einem Hartmetall, z. B. Hartchrom und/oder Wolframcarbid handeln. Die Dicke einer solchen Hartbeschichtung, die z. B. durch thermisches Spritzen aufgebracht wird und die im Rahmen der Erfindung nicht mit der erfindungsgemäßen Schweißbeschichtung zu verwechseln ist, beträgt vorzugsweise 0,05 mm bis 0,2 mm, d. h. sie ist bevorzugt (wesentlich) dünner als die Schweißbeschichtung bzw. die in den Spalt eingebrachte Schweißnaht. Die beim Stand der Technik im Zusammenhang mit einer solchen Hartbeschichtung beobachteten Probleme (insbesondere Rissbildung durch Mikrobewegungen) treten im Rahmen der Erfindung nicht auf, da die Belastungen der Hartbeschichtung durch das (vorherige) erfindungsgemäße Verschließen bzw. Abdecken des Spaltes geringer sind.

Die eingangs beschriebenen beiden Ausführungsformen (Schweißnaht einerseits und Schweißbeschichtung andererseits) können in bevorzugter Weiterbildung auch miteinander kombiniert werden. Das bedeutet, dass zunächst der Spalt mit Hilfe der (dünnen) Schweißnaht verschlossen und anschließend eine Schweißbeschichtung durch Auftragsschweißen aufgebracht werden kann. Darauf kann dann gegebenenfalls in der beschriebenen Weise noch die Hartbeschichtung aufgebracht werden.

Vorteilhaft ist dabei die Tatsache, dass das Abdecken oder Verschließen des umlaufenden Spaltes mit einem bevorzugt artgleichen Werkstoff realisiert wird, d. h. einem zu dem Werkstoff des Rollenkörpers artgleichen Werkstoff, wobei der Rollenkörper bevorzugt aus Stahl besteht. Als Schweißzusatzwerkstoff wird folglich bevorzugt ebenfalls Stahl eingesetzt.

Im Zusammenhang mit der beschriebenen Ausführungsform mit Schweißnaht ist es besonders vorteilhaft, wenn der dem Spalt zugewandte Rand des Messkörpers und/oder der dem Spalt zugewandte Rand des Rollenkörpers (vor dem Aufbringen des Schweißzusatzwerkstoffes) unter Bildung (jeweils) einer Fase abgeschrägt bzw. abgeschrägt sind. Eine solche geometrische Anpassung des Spaltes im Bereich der Rollenoberfläche unter Einbringung einer oder zweier Fasen bildet eine optimale Schweißnahtvorbereitung, z. B. im Sinne einer V-Naht, so dass eine optimale und besonders haltbare Schweißnaht auch bei verhältnismäßig geringer Dicke erzeugt wird.

Die Erfindung betrifft ferner ein Verfahren zum Herstellen einer Messrolle der beschriebenen Art, wobei der Messkörper unter Zwischenschaltung der Kraftmesssensoren in die Ausnehmung unter Bildung des umlaufenden Spaltes eingesetzt wird. Erfindungsgemäß wird anschließend dieser umlaufende Spalt in der beschriebenen Weise mit einem Schweißzusatzwerkstoff verschlossen oder abgedeckt. Dieses gelingt nach der ersten Ausführungsform dadurch, dass in den umlaufenden Spalt eine (umlaufende) Schweißnaht aus dem Schweißzusatzwerkstoff eingebracht wird und/oder das die Oberfläche des Rollenkörpers zumindest im Bereich der Messstellen, vorzugsweise über die gesamte Oberfläche durch Auftragsschweißen mit einer Schweißbeschichtung aus dem Schweißzusatzwerkstoff versehen wird, welche den umlaufenden Spalt abdeckt. Zur Schweißnahtvorbereitung können dabei in der beschriebenen Weise eine oder mehrere Fasen am Messkörper und/oder am Rollenkörper vorgesehen werden.

Verfahrenstechnisch ist es vorteilhaft, wenn die durch Einbringen und/oder Aufbringen des Schweißzusatzwerkstoffes "modifizierte" Oberfläche des Rollenkörpers anschließend abgeschliffen wird. Optional kann nach dem Aufbringen des Schweißzusatzwerkstoffes und gegebenenfalls nach einem Abschleifen die bereits beschriebene Hartbeschichtung aufgebracht werden, z. B. durch thermisches Spritzen.

Die erfindungsgemäße Messrolle kann insbesondere als Planheitsmessrolle und folglich zur Ermittlung bzw. Überwachung der Planheit eines Bandes, insbesondere eines Metallbandes, ausgebildet sein. Dabei können sowohl Ausführungsformen mit über die Bandbreite verteilten singulären Messstellen, z. B. kreisförmigen Abdeckungen (gemäß EP 0 595 072 A1) als auch Ausführungsformen mit schräg zur Rollenachse orientierten Messbalken zur kontinuierlichen Messung über die Bandbreite (z. B. gemäß DE 10 2004 003 676 A1) erfasst sein. Ferner können die in der DE 10 2014 115 023 A1 beschriebenen Ausführungsformen realisiert werden, bei denen über die Bandbreite eine Vielzahl von Messbalken angeordnet sind, die mit ihrer in Bandlaufrichtung verlaufenden Längsrichtung in einer Draufsicht auf die Rollenoberfläche senkrecht zur Rollenachse orientiert sind, so dass mit einer solchen Messstelle eine Vielzahl von Messwerten je Rollenumdrehung für eine jeweilige Breitenposition erfasst werden.

Alternativ oder ergänzend kann die Messrolle aber auch als Bandzugmessrolle für die Ermittlung bzw. Überwachung des Bandzuges eines Metallbandes ausgebildet sein, so dass insbesondere ein Referenzbalken gemäß DE 10 2008 030 282 B3 vorgesehen ist, der als Bandzugmessbalken zur Ermittlung des zeitlichen Verlaufs des Bandzuges im Wesentlichen entlang der Umfangsrichtung über einen vorgegebenen Umfangsbereich ausgebildet ist.

Stets kommt bei den beschriebenen unterschiedlichen Einsatzzwecken bzw. Ausgestaltungen erfindungsgemäß ein Schweißzusatzwerkstoff zum Verschließen oder Abdecken des umlaufenden Spaltes zum Einsatz.

Besonders bevorzugt wird die Erfindung bei der Verarbeitung von Metallbändern eingesetzt, z. B. Stahlbändern. Alternativ liegt es jedoch ebenso im Rahmen der Erfindung, die Messrolle für die Verarbeitung von Sandwichbändern, z. B. Bändern aus einem Verbundwerkstoff aus Metall z. B. Stahl und Kunststoff einzusetzen.

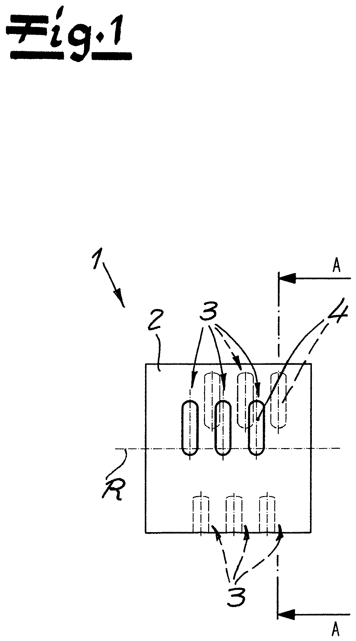

Im Folgenden wird die Erfindung anhand von lediglich Ausführungsbeispiele darstellenden Zeichnungen näher erläutert. Es zeigen
- Fig. 1: eine Messrolle zur Ermittlung bzw. Überwachung der Planheit eines Bandes in einer vereinfachten Draufsicht,
- Fig. 2: einen Schnitt A-A durch den Gegenstand nach Fig. 1 (Ausschnitt),
- Fig. 3: einen Schnitt B-B durch den Gegenstand nach Fig. 2,
- Fig. 4: einen Schnitt A-A durch den Gegenstand nach Fig. 1 in einer zweiten Ausführungsform der Erfindung,
- Fig. 5: einen Schnitt B-B durch den Gegenstand nach Fig. 4.

In den Figuren ist eine Messrolle 1 dargestellt, die als Planheitsmessrolle der Ermittlung und Überwachung von Planheitsfehlern bzw. der Planheit eines Bandes, insbesondere eines Metallbandes dient. Die Messrolle 1 wird in Betrieb drehbar (um die Achse R) gelagert, wobei sie bevorzugt nicht angetrieben ist. Sie lässt sich z. B. in eine Bandbehandlungslinie bzw. Bandprozesslinie integrieren. Das in den Zeichnungen nicht dargestellte Band steht über die gesamte Bandbreite unter einem vorgegebenen Bandzug und folglich unter einer Zugspannung und das Band umschlingt die Planheitsmessrolle mit einem vorgegebenen Umschlingungswinkel, der z. B. 2° bis 10° betragen kann. Die Ermittlung der Bandplanheit bzw. die Ermittlung von Planheitsfehlern erfolgt mit der Messrolle 1 "indirekt" durch Messung der Bandzugspannungsverteilung über die Bandbreite.

Dazu weist die Messrolle 1 einen Rollenkörper 2 und mehrere über die Rollenoberfläche (bzw. Umfangsfläche) in Breitenrichtung und/oder Umfangsrichtung verteilte und in den Rollenkörper 2 integrierte Messstellen 3 auf. Jede dieser Messstellen 3 weist einen mit der Oberfläche des Rollenkörpers 2 fluchtenden Messkörper 4 auf, der in eine Ausnehmung 5 im Rollenkörper 2 eingesetzt ist, und zwar unter Bildung eines umlaufenden Spaltes 6 zwischen Messkörper 4 einerseits und Rollenkörper 2 andererseits. Dabei sind die Messkörper 4 in den Ausnehmungen 5 auf jeweils einem oder mehreren Kraftmesssensoren 7 angeordnet. In dem dargestellten Ausführungsbeispiel sind die Messkörper 4 als Abdeckungen der Sensoren 7 unter Zwischenschaltung dieser Sensoren 7 gegen den Rollenkörper 2 verspannt, z. B. mit Befestigungsschrauben 8. Alternativ kommt jedoch auch in grundsätzlich bekannter Weise eine Verspannung mit Befestigungsstangen in Frage, wobei z. B. mit Befestigungsstangen zwei auf dem Rollenumfang gegenüberliegende Messkörper gegeneinander verspannt werden können. Der Rollenkörper 2 ist im Übrigen z. B. unterhalb der Messkörper 4 mit Durchbrechungen 14 für die Durchführung von Anschlusskabeln zu den Sensoren 7 versehen.

Die Figuren zeigen dabei Ausführungsformen, bei denen die Messkörper 4 als Messbalken ausgebildet sind, die mit ihrer in Bandlaufrichtung verlaufenden Längsrichtung in einer Draufsicht auf die Rollenoberfläche senkrecht zur Rollenachse R orientiert sind, wobei mit den einzelnen Messstellen 3 jeweils eine Vielzahl von Messwerten je Rollenumdrehung für die jeweilige Breitenposition erfassbar sind. Bei den dargestellten Ausführungsbeispielen sind die einzelnen Messstellen 3 folglich einzelnen Breitenpositionen zugeordnet, so dass mit jedem einzelnen Messbalken 4 eine Messung an einer bestimmten Breitenposition des Metallbandes erfolgt, d. h. es ist eine Lösung gemäß DE 10 2014 115 023 A1 realisiert.

Erfindungsgemäß ist der umlaufende Spalt 6 mit einem Schweißzusatzwerkstoff verschlossen oder abgedeckt.

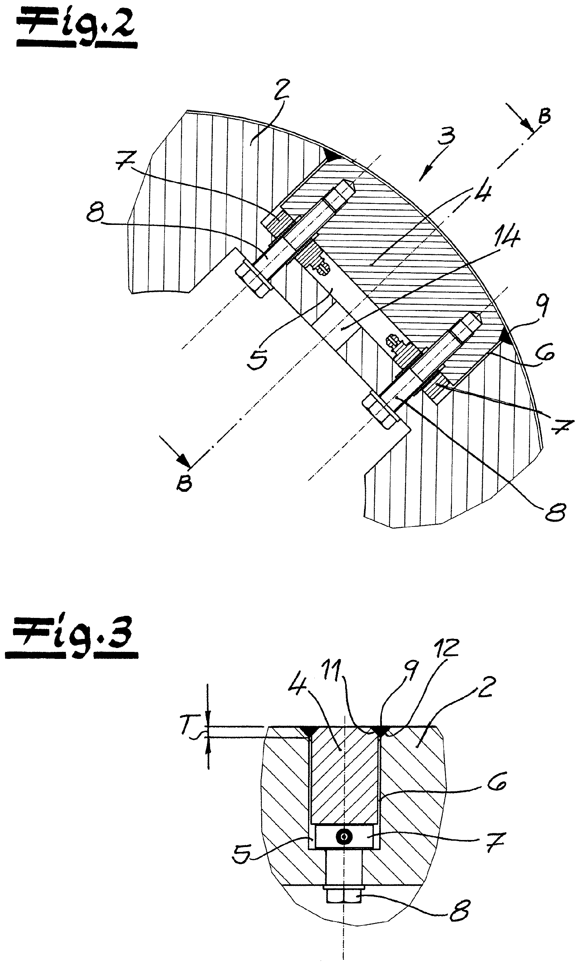

Dazu zeigen die Fig. 2 und 3 eine erste Ausführungsform, bei der in den umlaufenden Spalt eine (umlaufende) Schweißnaht 9 aus dem Schweißzusatzwerkstoff eingebracht ist. Der dem Spalt 6 zugewandte Rand des Messkörpers 4 ist unter Bildung einer (ersten) Fase 11 abgeschrägt. Ferner ist in dem dargestellten Ausführungsbeispiel der dem Spalt zugewandte Rand des Rollenkörpers 2 unter Bildung einer (zweiten) Fase 12 abgeschrägt. Diese Fasen 11, 12 dienen vor dem Aufbringen des Schweißzusatzwerkstoffs der Vorbereitung der einzubringenden Schweißnaht 9, welche den umlaufenden Spalt 6 im Bereich der Oberfläche des Rollenkörpers verschließt. Mit dieser Schweißnaht 9 wird folglich eine vollständig geschlossene Rollenoberfläche erzeugt, die eine einwandfreie Messung ohne Beschädigung des Metallbandes ermöglicht. Die Tiefe T entlang der Tiefe des Spaltes beträgt in dem dargestellten Ausführungsbeispiel z. B. 1 mm bis 3 mm. Nach dem Einbringen der Schweißnaht 9 ist es im Zuge der Herstellung der in den Figuren dargestellten Messrolle zweckmäßig, die Rollenoberfläche abzuschleifen. Anschließend besteht optional die Möglichkeit, auf die Oberfläche des Rollenkörpers 2 (einschließlich der Oberfläche der Messkörper 4) eine vollständig geschlossene Ummantelung in Form einer Hartbeschichtung 13 aufzubringen, die z. B. durch thermisches Spritzen erzeugt werden kann und die z. B. eine Dicke von lediglich 0,05 mm bis 0,2 mm aufweist.

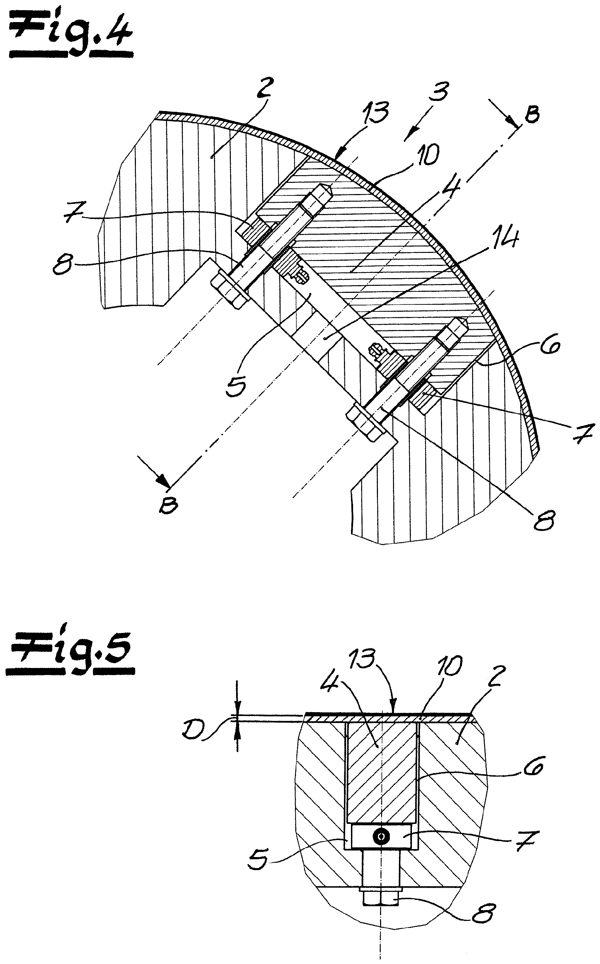

Die Fig. 4 und 5 zeigen eine zweite Ausführungsform der Erfindung, bei welcher die Oberfläche des Rollenkörpers 2 zumindest im Bereich der Messstellen 3, vorzugsweise jedoch über die gesamte Oberfläche mit einer durch Auftragsschweißen erzeugten Schweißbeschichtung 10 aus dem Schweißzusatzwerkstoff versehen ist, wobei diese Schweißbeschichtung 10 insbesondere auch den umlaufenden Spalt 6 abdeckt. Die Dicke D dieser Schweißbeschichtung 10 kann im Ausführungsbeispiel z. B. 1 mm bis 3 mm betragen. Auch bei dieser Ausführungsform ist es zweckmäßig, die Rollenoberfläche nach dem Aufbringen der Schweißbeschichtung 10 abzuschleifen. Anschließend kann wiederum optional eine Hartbeschichtung 13 in der bereits beschriebenen Weise aufgebracht werden. Jedenfalls wird auch bei der Ausführungsform nach den Fig. 4 und 5 der umlaufende Spalt mit einer geringen Dicke mit dem Schweißzusatzwerkstoff im Sinne einer Abdeckung verschlossen, so dass eine geschlossene Rollenoberfläche realisiert ist, ohne dass eine Verfälschung der Messergebnisse über einen Kraftnebenschluss erfolgt.

Dabei zeigen die Figuren beispielhaft eine Ausführungsform mit senkrecht zur Rollenachse orientierten Messkörpern. Die Erfindung lässt sich jedoch gleichermaßen bei anderen (bekannten) Ausführungsformen mit z. B. singulären, runden Messkörpern oder mit schräg zur Rollenachse orientierten Messbalken realisieren. Ferner lässt sich die Erfindung auch im Zusammenhang mit einem z. B. aus DE 10 2008 030 282 B3 bekannten Bandzugmessbalken realisieren, d. h. die Messrolle kann auch als Messrolle zur Ermittlung des Bandzuges eines Bandes ausgebildet sein.

## Patentansprüche

1. Messrolle (1) zur Ermittlung von Planheitsfehlern eines Bandes und/oder zur Ermittlung des Bandzuges eines Bandes, insbesondere eines Metallbandes, mit einem Rollenkörper (2) und einer oder mehreren in den Rollenkörper integrierten Messstellen (3),
wobei die Messstellen jeweils zumindest einen mit der Oberfläche des Rollenkörpers (2) fluchtenden Messkörper (4) aufweisen, **dadurch gekennzeichnet, dass** der jeweils zumindest eine Messkörper (4) unter Bildung eines umlaufenden Spaltes (6) in einer Ausnehmung (5) in dem Rollenkörper (2) auf einem oder mehreren Kraftmesssensoren (7) angeordnet ist,
wobei der umlaufende Spalt (6) mit einem Schweißzusatzwerkstoff verschlossen oder abgedeckt ist, und wobei in den umlaufenden Spalt (6) eine Schweißnaht (9) aus dem Schweißzusatzwerkstoff eingebracht ist,
und/oder die Oberfläche des Rollenkörpers (2) zumindest im Bereich der Messstellen (3) mit einer durch Auftragsschweißen erzeugten Schweißbeschichtung (10) aus dem Schweißzusatzwerkstoff versehen ist, welche den umlaufenden Spalt (6) abdeckt.

2. Messrolle nach Anspruch 1, **dadurch gekennzeichnet, dass** die gesamte Oberfläche des Rollenkörpers (2) mit einer durch Auftragschweißen erzeugten Schweißbeschichtung (10) versehen ist.

3. Messrolle nach Anspruch 1 oder 2, **dadurch gekennzeichnet, dass** der dem Spalt (6) zugewandte Rand des Messkörpers (4) unter Bildung einer Fase (11) abgeschrägt ist.

4. Messrolle nach einem der Ansprüche 1 bis 3, **dadurch gekennzeichnet, dass** dem der Spalt (6) zugewandte Rand des Rollenkörpers (2) unter Bildung einer Fase (12) abgeschrägt ist.

5. Messrolle nach einem der Ansprüche 1 bis 4, **dadurch gekennzeichnet, dass** die Schweißnaht (9) in dem Spalt eine Tiefe (T) von 0,5 mm bis 5 mm, z. B. 1 mm bis 4 mm, vorzugsweise 1 mm bis 3 mm aufweist.

6. Messrolle nach einem der Ansprüche 1 bis 5, **dadurch gekennzeichnet, dass** die Schweißbeschichtung (10) eine Dicke (D) von 0,5 mm bis 5 mm, z. B. 1 mm bis 4 mm, vorzugsweise 1 mm bis 3 mm aufweist.

7. Messrolle nach einem der Ansprüche 1 bis 6, **dadurch gekennzeichnet, dass** der Rollenkörper (2) mit einer auf den Schweißzusatzwerkstoff, z. B. die Schweißnaht (9) und/oder die Schweißbeschichtung (10), aufgebrachten Hartbeschichtung (13) versehen ist, die z. B. aus oder mit Wolframcarbid besteht.

8. Messrolle nach einem der Ansprüche 1 bis 7, **dadurch gekennzeichnet, dass** der Schweißzusatzwerkstoff artgleich zu dem Werkstoff des Rollenkörpers (2) und/oder artgleich zu dem Werkstoff des Messkörpers (4) ist, wobei vorzugsweise der Rollenkörper (2) und/oder der Messkörper (4) aus Stahl bestehen und vorzugsweise als Schweißzusatzwerkstoff ein Stahl verwendet wird.

9. Verfahren zum Herstellen einer Planheitsmessrolle nach einem der Ansprüche 1 bis 8, **dadurch gekennzeichnet, dass** der Messkörper (4) unter Zwischenschaltung der Kraftmesssensoren (7) in die Ausnehmung (5) unter Bildung des umlaufenden Spaltes (6) eingesetzt wird, und anschließend der umlaufende Spalt (6) mit einem Schweißzusatzwerkstoff verschlossen oder abgedeckt wird, wobei in den umlaufenden Spalt (6) eine Schweißnaht (9) aus dem Schweißzusatzwerkstoff eingebracht wird und/oder die Oberfläche des Rollenkörpers (2) durch Auftragsschweißen mit einer Schweißbeschichtung (10) aus dem Schweißzusatzwerkstoff versehen wird, welche den umlaufenden Spalt abdeckt.

10. Verfahren nach Anspruch 9, **dadurch gekennzeichnet, dass** der dem Spalt zugewandte Rand des Messkörpers, z. B. als Schweißnahtvorbereitung, vor dem Aufbringen des Schweißzusatzwerkstoffes unter Bildung einer Fase (11) abgeschrägt wird und/oder dass der dem Spalt zugewandte Rand des Rollenkörpers vor dem Aufbringen des Schweißzusatzwerkstoffes unter Bildung einer Fase (12) abgeschrägt wird.

11. Verfahren nach Anspruch 9 oder 10, **dadurch gekennzeichnet, dass** der Rollenkörper (2) mit einer auf den Schweißzusatzwerkstoff, z. B. die Schweißnaht (9) und/oder die Auftragsschweißung (10), aufgebrachten Hartbeschichtung (13) versehen wird, z. B. durch thermisches Spritzen.

## Claims

1. Measuring roll (1) for identifying flatness errors of a strip and/or for determining the strip tension of a strip, particularly a metal strip, having a roll body (2) and one or more measuring points (3) integrated in the roll body,
wherein the measuring points respectively have at least one measuring body (4) aligned with the surface of the roll body (2), **characterised in that** the at least one measuring body (4) is respectively arranged on one or more force-measuring sensors (7) in a recess (5) in the roll body (2), forming a circumferential gap (6),
wherein the circumferential gap (6) is closed or covered with a welding filler, and wherein a welding seam (9) made of the welding filler is inserted in the circumferential gap (6), and/or
the surface of the roll body (2) is provided, at least in the area of the measuring points (3), with a weld overlay (10) made of the welding filler and produced by build-up welding, which covers the circumferential gap (6).

2. Measuring roll according to claim 1, **characterised in that** the entire surface of the roll body (2) is provided with a weld overlay (10) produced by build-up welding.

3. Measuring roll according to claim 1 or 2, **characterised in that** the edge of the measuring body (4) facing the gap (6) is angled, thereby forming a bevel (11).

4. Measuring roll according to any of claims 1 to 3, **characterised in that** the edge of the roll body (2) facing the gap (6) is angled, thereby forming a bevel (12).

5. Measuring roll according to any of claims 1 to 4, **characterised in that** the welding seam (9) in the gap has a depth (D) of 0.5 mm to 5 mm, e.g. 1 mm to 4 mm and preferably 1 mm to 3 mm.

6. Measuring roll according to any of claims 1 to 5, **characterised in that** the weld overlay (10) has a thickness (T) of 0.5 mm to 5 mm, e.g. 1 mm to 4 mm and preferably 1 mm to 3 mm.

7. Measuring roll according to any of claims 1 to 6, **characterised in that** the roll body (2) is provided with a hard coating (13), consisting for example of, or including tungsten carbide, applied to the welding filler, e.g. the welding seam (9) and/or the weld overlay (10).

8. Measuring roll according to any of claims 1 to 7, **characterised in that** the welding filler is of the same type as the material of the roll body (2) and/or of the same type as the material of the measuring body (4), wherein the roll body (2) and/or the measuring body (4) consist preferably of steel, and a steel is preferably used as the welding filler.

9. Method for manufacturing a flatness measuring roll according to any of claims 1 to 8, **characterised in that** the measuring body (4) is inserted into the recess (5) with the interposition of the force-measuring sensors (7), forming the circumferential gap (6),
and subsequently the circumferential gap (6) is closed or covered with a welding filler,
a welding seam (9) made of the welding filler is inserted in the circumferential gap (6), and/or the surface of the roll body (2) is provided with a weld overlay (10) produced by build-up welding, which covers the circumferential gap.

10. Method according to claim 9, **characterised in that** the edge of the measuring body facing the gap is angled, e.g. as preparation for the welding seam, before the welding filler is applied, thereby forming a bevel (11) and/or that the edge of the roll body facing the gap is angled before the welding filler is applied, thereby forming a bevel (12).

11. Method according to claim 9 or 10, **characterised in that** the roll body (2) is provided with a hard coating (13), applied to the welding filler, e.g. the welding seam (9) and/or the build-up welding (10), by means of thermal spraying for example.

## Revendications

1. Rouleau de mesure (1) destiné à déterminer des défauts de planéité d'une bande et/ou à déterminer la tension de bande d'une bande, en particulier d'une bande métallique,
avec un corps de rouleau (2) et un ou plusieurs points de mesure (3) intégrés dans le corps de rouleau,
dans lequel les points de mesure présentent respectivement au moins un corps de mesure (4) en alignement avec la surface du corps de rouleau (2), **caractérisé en ce que** le respectivement au moins un corps de mesure (4) est disposé sur un ou plusieurs capteurs de mesure de force (7) dans un évidement (5) dans le corps de rouleau (2), formant une fente périphérique (6),
dans lequel la fente périphérique (6) est fermée ou recouverte avec un matériau d'apport pour soudure, et dans lequel un cordon de soudure (9) composé du matériau d'apport pour soudure est introduit dans la fente périphérique (6),
et/ou
la surface du corps de rouleau (2) est pourvue, au moins dans la zone des points de mesure (3), d'un revêtement de soudure (10), composé du matériau d'apport pour soudure, produit par rechargement, lequel recouvre la fente périphérique (6).

2. Rouleau de mesure selon la revendication 1, **caractérisé en ce que** toute la surface du corps de rouleau (2) est pourvue d'un revêtement de soudure (10) produit par rechargement.

3. Rouleau de mesure selon la revendication 1 ou 2, **caractérisé en ce que** le bord du corps de mesure (4) tourné vers la fente (6) est biseauté formant ainsi un chanfrein (11).

4. Rouleau de mesure selon l'une quelconque des revendications 1 à 3, **caractérisé en ce que** le bord du corps de rouleau (2) tourné vers la fente (6) est biseauté avec formation d'un chanfrein (12).

5. Rouleau de mesure selon l'une quelconque des revendications 1 à 4, **caractérisé en ce que** le cordon de soudure (9) dans la fente présente une profondeur (T) de 0,5 mm à 5 mm, par exemple 1 mm à 4 mm, de préférence 1 mm à 3 mm.

6. Rouleau de mesure selon l'une quelconque des revendications 1 à 5, **caractérisé en ce que** le revêtement de soudure (10) présente une épaisseur (D) de 0,5 mm à 5 mm, par exemple 1 mm à 4 mm, de préférence 1 mm à 3 mm.

7. Rouleau de mesure selon l'une quelconque des revendications 1 à 6, **caractérisé en ce que** le corps de rouleau (2) est pourvu d'un revêtement dur (13), constitué par exemple de ou avec du carbure de tungstène, appliqué sur le matériau d'apport pour soudure, par exemple le cordon de soudure (9) et/ou le revêtement de soudure (10).

8. Rouleau de mesure selon l'une quelconque des revendications 1 à 7, **caractérisé en ce que** le matériau d'apport pour soudure est de même nature que le matériau du corps de rouleau (2) et/ou de même nature que le matériau du corps de mesure (4), dans lequel de préférence le corps de rouleau (2) et/ou le corps de mesure (4) sont constitués d'acier et de préférence un acier est utilisé comme matériau d'apport pour soudure.

9. Procédé pour fabriquer un rouleau de mesure de planéité selon l'une quelconque des revendications précédentes 1 à 8, **caractérisé en ce que** le corps de mesure (4) est inséré dans l'évidement (5) avec interposition des capteurs de mesure de force (7), formant la fente périphérique (6),
et ensuite la fente périphérique (6) est fermée ou recouverte avec un matériau d'apport pour soudure,
dans lequel un cordon de soudure (9) composé du matériau d'apport pour soudure est introduit dans la fente périphérique (6) et/ou la surface du corps de rouleau (2) est pourvue d'un revêtement de soudure (10) produit par rechargement, composé du matériau d'apport pour soudure, lequel recouvre la fente périphérique.

10. Procédé selon la revendication 9, **caractérisé en ce que** le bord du corps de mesure tourné vers la fente est biseauté, par exemple en tant que préparation pour le cordon de soudure, avant l'application du matériau d'apport pour soudure, formant ainsi un chanfrein (11) et/ou que le bord du corps de rouleau tourné vers la fente est biseauté avant l'application du matériau d'apport pour soudure formant ainsi un chanfrein (12).

11. Procédé selon la revendication 9 ou 10, **caractérisé en ce que** le corps de rouleau (2) est pourvu d'un revêtement dur (13) appliqué sur le matériau d'apport pour soudure, par exemple le cordon de soudure (9) et/ou la soudure par rechargement (10), par exemple par projection thermique.
